# FASCICULE DE BREVET EUROPEEN

(11) **EP 4 554 861 B1**
(45) Date de publication et mention de la délivrance du brevet: **17.06.2026**
(21) Numéro de dépôt: 23764354.9
(22) Date de dépôt: 12.07.2023
(51) Int. Cl.: B64G 1/12, B64G 1/00, B64G 1/60, B64G 1/64, B64G 1/14, B64G 1/62, B64G 1/52

(54) **VEHICULE ORBITAL REUTILISABLE COMPRENANT UN VEHICULE D'EVACUATION D'EQUIPAGE A EXTRACTION VERS L'AVANT**
WIEDERVERWENDBARER ORBITER MIT EINER AUS DER FRONTSEITE EXTRAHIERBAREN RETTUNGSKAPSEL
REUSABLE ORBITAL VEHICLE COMPRISING A CREW-EVACUATION VEHICLE EXTRACTED FROM THE FRONT

(30) Priorité: 13.07.2022 FR 2207234
(43) Date de publication de la demande: 21.05.2025
(73) Titulaire: ARIANEGROUP SAS, 78130 Les Mureaux (FR)
(72) Inventeur: PRAMPOLINI, Marco, 78130 LES MUREAUX (FR); BOURGOING, Alexis, 78130 LES MUREAUX (FR); MARETTO, Federico Giovanni, 78130 LES MUREAUX (FR)
(74) Mandataire: Cabinet Le Guen Maillet
(86) Numéro de dépôt international: PCT/FR2023/051086
(87) Numéro de publication internationale: WO 2024/013460

(56) Documents cités:
- WO-A2-2014/021741
- FR-A1- 3 116 512
- RU-C1- 2 053 168
- US-A- 2 977 080
- US-B1- 6 948 682

## Description

### Domaine technique

La présente invention se rapporte de manière générale au domaine du transport spatial de personnes.

L'invention concerne en particulier un véhicule orbital réutilisable et un procédé d'évacuation de l'équipage d'un tel véhicule, permettant l'évacuation d'un équipage en cas d'interruption de mission.

### État de la technique antérieure

Les missions spatiales habitées sont généralement réalisées au moyen d'un système de transport spatial comprenant un véhicule orbital réutilisable, qui embarque un équipage, installé sur un lanceur spatial. On entend par « véhicule réutilisable » tout véhicule spatial conçu pour effectuer une rentrée atmosphérique et atterrir au terme de sa mission, sans que cela n'exclut d'avoir éventuellement à remplacer certains composants du véhicule avant de pouvoir effectuer une nouvelle mission spatiale avec ce dernier.

Dans certains cas, le véhicule orbital est installé au sommet du lanceur et en forme ainsi le dernier étage, les premiers étages étant des étages de propulsion destinés à se séparer successivement du lanceur au cours ou au terme de la phase d'ascension après avoir consommé leur carburant.

Un aspect important de ce type de systèmes de transport spatiaux concerne les possibilités d'évacuer l'équipage en cas d'anomalie au cours de la mission spatiale.

Dans les systèmes actuellement opérationnels, le véhicule orbital réutilisable est mis à profit pour évacuer l'équipage en cas de défaillance du lanceur au cours du décollage ou de la phase d'ascension. À cette fin, des propulseurs équipant le véhicule orbital réutilisable sont mis à feu pour arracher le véhicule orbital réutilisable du lanceur spatial le plus rapidement possible.

La rapidité de cette manœuvre est toutefois limitée du fait de la masse potentiellement importante d'un véhicule orbital, ce dernier devant embarquer l'ensemble des équipements nécessaire à l'accomplissement des missions en orbite.

De plus, en cas de défaillance du véhicule orbital réutilisable lui-même à un stade ultérieur de la mission spatiale, l'état de la technique n'offre comme solution pour évacuer l'équipage que des capsules de sauvetage dont l'utilisation n'est possible qu'en phase d'approche lorsque le véhicule orbital a été suffisamment ralenti. De plus, l'utilisation de telles capsules peut présenter un danger lorsque le véhicule orbital n'est pas orienté de manière adéquate.

Le document FR-A-3 116 512 divulgue un système de transport spatial réutilisable. Le document US-A-2,977,080 divulgue un aéronef avec une cabine détachable. Un tel aéronef n'est pas adapté à réaliser des missions spatiales. Les documents WO-A-2014/021741, US-B-6,948,682 et RU-C-2 053 168 divulguent des systèmes de l'état de la technique.

### Exposé de l'invention

L'invention a pour objet un véhicule orbital réutilisable permettant de remédier au moins en partie à ces problèmes, ainsi qu'un procédé d'évacuation de l'équipage d'un tel véhicule.

Elle propose à cet effet un véhicule orbital réutilisable pour système de transport spatial, comprenant un fuselage de forme évasée dans une direction allant d'une extrémité avant du véhicule orbital réutilisable jusqu'à une extrémité arrière dudit fuselage et au sein duquel est défini un logement s'étendant jusqu'à l'extrémité avant du véhicule orbital réutilisable, et un véhicule d'évacuation d'équipage logé dans ledit logement en étant orienté pour s'extraire du logement dans une direction orientée depuis ladite extrémité arrière du fuselage vers ladite extrémité avant du véhicule orbital réutilisable.

De manière générale, le fait que l'extraction du véhicule d'évacuation d'équipage hors du véhicule orbital réutilisable s'effectue vers l'avant, dans la direction de déplacement nominale du véhicule orbital réutilisable, rend possible cette extraction non seulement en phase d'ascension mais également sur le pas de tir avant décollage et pendant les phases d'approche, d'atterrissage, et même postérieurement à l'atterrissage, dans la mesure où les chances que le véhicule orbital réutilisable présente une attitude compatible avec une telle extraction sont ainsi maximisées.

Dans des modes de réalisation préférés de l'invention, ledit fuselage comprend un capotage qui entoure le logement et qui s'étend de manière évasée en direction de l'extrémité arrière de ce fuselage à partir d'une extrémité avant du fuselage, qui est tronquée de manière à définir une ouverture qui débouche dans le logement ; et le véhicule d'évacuation d'équipage comporte un fuselage qui présente un nez s'étendant au travers de l'ouverture de manière à constituer un nez du véhicule orbital réutilisable.

De préférence, ledit nez s'étend en continuité aérodynamique avec le capotage.

De préférence, le fuselage présente un décrochement formé à la base dudit nez, et dans lequel l'extrémité avant tronquée du capotage est agencée axialement en regard dudit décrochement.

De préférence, le capotage est formé d'une rangée annulaire de panneaux joints deux-à-deux par des liaisons frangibles constituant des zones de rupture privilégiée.

Dans des modes de réalisation préférés de l'invention, le véhicule orbital réutilisable comprend une collerette déflectrice de forme générale tronconique, s'étendant au sein du logement de manière à entourer le véhicule d'évacuation d'équipage et à être disposée en arrière et axialement en regard par rapport à des moyens propulsifs du véhicule d'évacuation d'équipage configurés pour générer une poussée dans ladite direction.

L'invention concerne également un procédé d'évacuation d'un équipage d'un véhicule orbital réutilisable du type décrit ci-dessus, comprenant des étapes consistant à :
- A) installer l'équipage du véhicule orbital réutilisable au sein du véhicule d'évacuation d'équipage ; puis
- B) évacuer l'équipage en déplaçant le véhicule d'évacuation d'équipage dans ladite direction de manière à l'extraire hors du logement.

Dans des modes de réalisation préférés de l'invention, le véhicule d'évacuation d'équipage emporte avec lui le nez du véhicule orbital réutilisable au cours de l'étape B.

Dans des modes de réalisation préférés de l'invention, le véhicule d'évacuation d'équipage provoque la rupture desdites liaisons frangibles au cours de l'étape B.

Dans des modes de réalisation préférés de l'invention, le véhicule d'évacuation d'équipage provoque la rupture de ladite collerette déflectrice au cours de l'étape B.

Dans des modes de réalisation préférés de l'invention, l'étape B est mise en œuvre au cours de l'une quelconque des phases de décollage, d'ascension, de fin de rentrée atmosphérique, d'approche finale, d'atterrissage et post-atterrissage.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
[Fig. 1A] est une vue schématique d'un système de transport spatial comprenant un véhicule orbital réutilisable ;
[Fig. 1B] est une vue schématique du véhicule orbital réutilisable au terme d'une mission spatiale ;
[Fig. 2] est une vue schématique en perspective d'une partie avant du véhicule orbital réutilisable, laissant apercevoir au travers du fuselage du véhicule orbital réutilisable un véhicule d'évacuation d'équipage logé dans celui-ci ;
[Fig. 2A] est une vue à plus grande échelle d'une partie de la figure 2 ;
[Fig. 3] est une vue schématique de côté de la partie avant du véhicule orbital réutilisable de la figure 2, laissant également apercevoir le véhicule d'évacuation d'équipage au travers du fuselage du véhicule orbital réutilisable ;
[Fig. 4] est une vue semblable à la figure 2 sans le véhicule d'évacuation d'équipage ;
[Fig. 4A] est une vue à plus grande échelle d'une partie de la figure 4 ;
[Fig. 5] est une vue semblable à la figure 3 sans le véhicule d'évacuation d'équipage ;
[Fig. 6] est une vue schématique en perspective du véhicule d'évacuation d'équipage dans une première configuration destinée à l'intégration du véhicule d'évacuation d'équipage au véhicule orbital réutilisable ;
[Fig. 7] est une vue schématique en section longitudinale du véhicule d'évacuation d'équipage dans la première configuration ;
[Fig. 8] est une vue schématique en perspective du véhicule d'évacuation d'équipage dans une seconde configuration destinée au vol ;
[Fig. 9] est une vue schématique en section longitudinale du véhicule d'évacuation d'équipage dans la seconde configuration.

### Exposé détaillé de modes de réalisation préférés

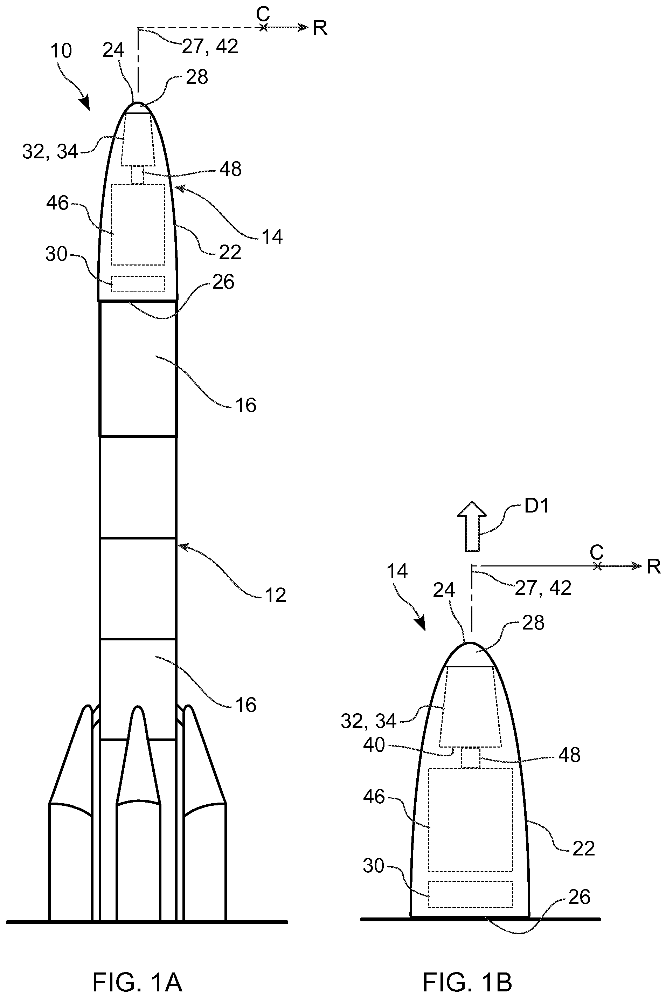

La figure 1A illustre un système de transport spatial 10 comprenant de manière générale un lanceur spatial 12 au sommet duquel est installé un véhicule orbital réutilisable 14.

Le lanceur spatial 12 comporte typiquement un ou plusieurs étage(s) propulsif(s) 16.

Le véhicule orbital réutilisable 14 comprend un fuselage 22 aérodynamique de forme globalement évasée dans une direction allant d'une extrémité avant 24 du véhicule orbital réutilisable vers une extrémité arrière 26 de ce fuselage. La direction opposée, qui est donc orientée de l'extrémité arrière 26 vers l'extrémité avant 24, constitue une direction de déplacement nominale D1 du véhicule, qui est par exemple parallèle à un axe longitudinal moyen 27 du véhicule. Dans la présente description, cet axe 27 sert de référence à la définition d'un référentiel cylindrique {R, C} dans lequel la direction radiale R est en tout point une direction orthogonale à l'axe 27 et passant par ce dernier, et la direction ortho-radiale C est en tout point une direction orthogonale à l'axe 27 et à la direction radiale R.

Il faut donc comprendre que le véhicule orbital réutilisable 14 est conçu pour se déplacer dans la direction D1 dans toutes les phases d'une mission spatiale, y compris dans la phase de rentrée atmosphérique, et pour n'avoir à effectuer un retournement que lors de la phase finale d'approche en vue d'un atterrissage sur l'arrière du véhicule. Afin de conférer un profil optimal au véhicule orbital réutilisable 14, ce dernier est doté d'un nez 28, préférentiellement en forme de calotte ou plus généralement en forme de tronc de cône à sommet arrondi, formant l'extrémité avant 24 du véhicule, comme cela apparaîtra plus clairement dans ce qui suit.

Le véhicule orbital réutilisable 14 comprend en outre des moyens propulsifs 30 comprenant par exemple un ou plusieurs moteurs-fusées. Ces moyens propulsifs 30 sont aptes notamment à générer une poussée orientée dans la direction de déplacement nominale D1. Il est à noter que lorsque le véhicule orbital réutilisable 14 est installé sur le lanceur spatial 12 comme illustré sur la figure 1A, le nez 28 du véhicule orbital réutilisable constitue une extrémité avant de l'ensemble du système de transport spatial 10, tandis que l'extrémité arrière 26 du fuselage 22 est située en regard d'un étage propulsif 16 du lanceur.

Au cours d'une mission typique, le système de transport spatial 10 complet est lancé à partir d'un pas de tir, en étant propulsé par le ou les étages propulsifs 16. Ces derniers cessent successivement de fonctionner et se séparent du système de transport spatial 10 jusqu'à laisser le véhicule orbital réutilisable 14 poursuivre sa trajectoire et atteindre une orbite cible, en utilisant au besoin ses moyens propulsifs 30 pour effectuer des ajustements de trajectoire. Au terme de la mission, le véhicule orbital réutilisable 14 met à profit ses moyens propulsifs 30 afin de quitter son orbite et se placer sur une trajectoire de rentrée atmosphérique lui permettant d'atteindre une zone d'atterrissage cible. À cet effet, des moyens d'orientation du véhicule orbital réutilisable 14, qui peuvent par exemple être les moyens propulsifs 30 ou des surfaces aérodynamiques mobiles, sont mis en œuvre de sorte à orienter le véhicule orbital réutilisable de manière à placer le fuselage 22 de ce véhicule sous une incidence permettant que ledit fuselage 22 génère une portance. Durant toute cette phase, le véhicule orbital réutilisable présente son nez 28 vers l'avant dans la direction de son déplacement, de sorte que le nez 28 contribue à la protection thermique du véhicule orbital réutilisable. À l'approche de la zone d'atterrissage cible, le véhicule orbital réutilisable 14 effectue une manœuvre de retournement puis se pose en orientant son nez 28 vers le haut et l'extrémité arrière 26 du fuselage 22 vers le sol.

La présente divulgation vise, de manière générale, à présenter des moyens permettant d'améliorer les modalités de sauvetage d'un équipage en cas d'anomalie au cours d'une mission spatiale.

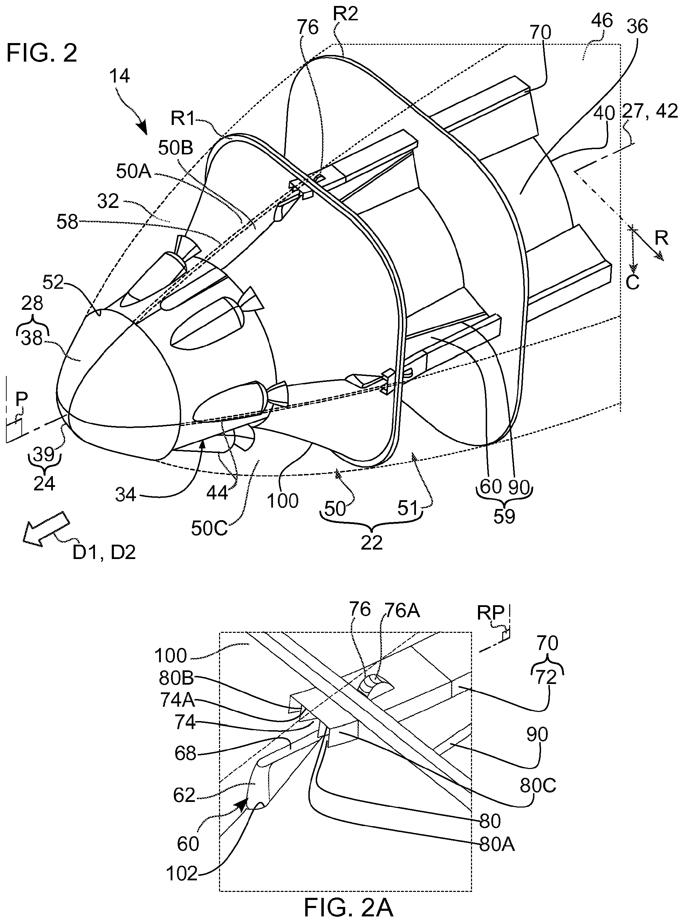

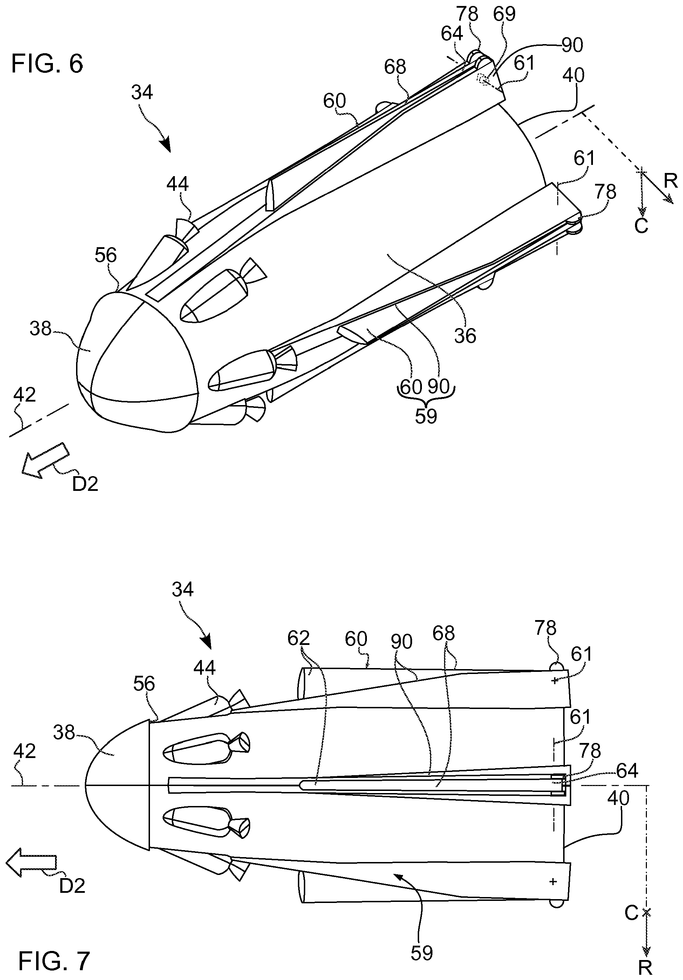

À cet effet, en référence aux figures 2-5, le véhicule orbital réutilisable 14 comporte un logement 32 entouré par le fuselage 22 et dans lequel est disposé un véhicule d'évacuation d'équipage 34, également visible seul sur les figures 6 et 7, de telle sorte que ledit véhicule d'évacuation d'équipage 34 puisse s'extraire du véhicule orbital réutilisable 14 et effectuer un vol indépendamment de ce dernier. Le véhicule d'évacuation d'équipage 34 est destiné à permettre d'évacuer un équipage hors du véhicule orbital réutilisable 14 en phase d'ascension mais également sur le pas de tir, avant décollage et au moment du décollage, ainsi qu'en phase d'approche finale et d'atterrissage et postérieurement à l'atterrissage, comme cela apparaîtra plus clairement dans ce qui suit.

Au décollage ou sur le pas de tir, il est en particulier avantageux d'utiliser un tel véhicule dédié pour l'évacuation d'équipage au lieu d'utiliser le véhicule orbital réutilisable lui-même, dans la mesure où un véhicule dédié à l'évacuation peut être de masse significativement réduite par comparaison avec la masse d'un véhicule orbital réutilisable qui doit intégrer l'ensemble des équipements destinés à l'accomplissement des diverses missions de l'équipage en orbite ainsi que les équipements et composants nécessaires à permettre une rentrée atmosphérique. Le gain en termes d'accélération d'extraction permis par une telle réduction de masse peut notamment s'avérer crucial pour sauver un équipage en cas d'explosion du lanceur spatial 12 au décollage ou en phase d'ascension. Ce gain peut également permettre d'allonger la trajectoire balistique du véhicule d'évacuation d'équipage, ce qui est avantageux dans les cas où la zone environnant le pas de tir n'offre pas les conditions de sécurité requises pour une récupération du véhicule d'évacuation d'équipage. Dans certains modes de réalisation, le véhicule d'évacuation d'équipage est ainsi capable de s'éloigner de quelques kilomètres du pas de tir, par exemple 3,5 kilomètres dans un exemple de réalisation ou 5 kilomètres dans un autre exemple de réalisation, en cas de déclenchement de la procédure d'évacuation sur le pas de tir.

En phase d'approche finale et d'atterrissage et postérieurement à l'atterrissage, la présence d'un véhicule dédié à l'évacuation permet d'envisager une évacuation de l'équipage en cas d'anomalie sur le véhicule orbital réutilisable, ce qui n'est évidemment pas possible dans les cas où un tel véhicule dédié n'est pas prévu et où toute possibilité d'évacuation au cours de la mission spatiale doit se faire au moyen du véhicule orbital réutilisable lui-même.

Par comparaison avec les tours d'extraction bien connues de l'état de la technique (par exemple celles d'Apollo, de Soyouz ou encore d'Orion), qui sont disposées intégralement devant un véhicule orbital, le fait de loger le véhicule d'évacuation d'équipage au sein du véhicule orbital permet de conserver le véhicule d'évacuation d'équipage à disposition durant toute la mission, alors que les tours d'extraction, qui ne sont pas adaptées pour effectuer des manœuvres de rentrée atmosphérique, sont généralement larguées au cours de la phase d'ascension.

Le véhicule d'évacuation d'équipage 34 comporte avantageusement en son sein une cabine dotée d'équipements de pilotage (non visibles sur les figures), et des moyens d'interfaçage de ces équipements avec des composants et/ou équipements du véhicule orbital réutilisable 14 (autres que ceux faisant partie du véhicule d'évacuation d'équipage 34), en particulier avec les moyens propulsifs 30 et le cas échéant avec les moyens d'orientation du véhicule orbital réutilisable (si ces derniers diffèrent des moyens propulsifs 30), de sorte que le pilotage du véhicule orbital réutilisable 14 par un équipage s'effectue au sein du véhicule d'évacuation d'équipage 34 au moyen desdits équipements de pilotage.

De plus, le véhicule d'évacuation d'équipage 34 comporte un fuselage 36 en forme générale d'ogive (c'est-à-dire « bullet-shaped » dans la terminologie anglo-saxonne) définissant un nez 38 à une extrémité du véhicule d'évacuation d'équipage, dite extrémité avant 39 de celui-ci eu égard à une direction de déplacement nominale D2 du véhicule d'évacuation d'équipage. Ce fuselage 36 s'étend dans la direction opposée jusqu'à une paroi arrière 40 qui définit une extrémité arrière du fuselage 36. La paroi arrière 40 s'étend par exemple transversalement à un axe 42 du véhicule d'évacuation d'équipage, qui constitue par exemple un axe de symétrie pour le fuselage 36. Entre le nez 38 et la paroi arrière 40, le fuselage 36 présente, au moins dans une portion avant de ce dernier, une forme légèrement évasée dans la direction allant du nez 38 vers la paroi arrière 40, afin de satisfaire au mieux la loi des aires, comme cela apparaîtra plus clairement dans ce qui suit. Le fuselage 36 définit ainsi un profil aérodynamique de forme allongée selon l'axe 42 du véhicule d'évacuation d'équipage, qui définit donc une direction longitudinale de ce véhicule. Une telle forme est optimisée pour favoriser l'accélération du véhicule d'évacuation d'équipage dans l'atmosphère, notamment en cas d'interruption de mission sur pas de tir ou en phase de lancement, lorsque la rapidité de l'extraction du véhicule d'évacuation d'équipage et de son éloignement du lanceur sont les plus critiques. La direction de déplacement nominale D2 du véhicule d'évacuation d'équipage est parallèle à l'axe 42, comme cela apparaîtra plus clairement dans ce qui suit.

Enfin, le véhicule d'évacuation d'équipage 34 comporte des moyens propulsifs 44 rapportés sur le fuselage 36 de celui-ci, pour permettre l'extraction de ce véhicule d'évacuation d'équipage 34 hors de son logement 32 au sein du véhicule orbital réutilisable 14, et pour permettre l'ajustement éventuel de la trajectoire du véhicule d'évacuation d'équipage, comme cela apparaîtra plus clairement dans ce qui suit.

Par ailleurs, le véhicule orbital réutilisable 14 comporte avantageusement un espace de travail 46 (figure 1B) défini en arrière par rapport au logement 32 et destiné à être accessible pour l'équipage pendant des phases non critiques de vol orbital, par exemple par l'intermédiaire d'un sas 48 dans lequel débouche une trappe agencée dans la paroi arrière 40 du fuselage 36 du véhicule d'évacuation d'équipage.

Le mode d'atterrissage du véhicule d'évacuation d'équipage 34 ne fait pas l'objet de la présente divulgation et peut être d'un type conventionnel, par exemple au moyen d'un ou plusieurs parachutes permettant de freiner le véhicule d'évacuation d'équipage jusqu'à ce que ce dernier se pose sur terre ou en mer, à plat ou avec le nez en avant.

Selon un premier aspect de la présente divulgation, le logement 32 du véhicule orbital réutilisable 14 s'étend jusqu'à une extrémité avant du fuselage 22 du véhicule orbital réutilisable, et le véhicule d'évacuation d'équipage 34 est agencé dans le logement 32 du véhicule orbital réutilisable 14 en étant orienté de manière à permettre une extraction du véhicule d'évacuation d'équipage 34 dans la direction de déplacement nominale D1 du véhicule orbital réutilisable. En particulier, le véhicule d'évacuation d'équipage 34 est disposé de sorte que sa direction de déplacement nominale D2 soit confondue avec la direction de déplacement nominale D1 du véhicule orbital réutilisable 14.

À cet effet, le véhicule d'évacuation d'équipage 34 est en particulier disposé de sorte que son axe 42 s'étende de manière parallèle ou sensiblement parallèle à la direction de déplacement nominale D1 du véhicule orbital réutilisable 14, en étant de préférence centré selon un plan longitudinal médian P du véhicule orbital réutilisable. Dans le mode de réalisation illustré, l'axe 42 du véhicule d'évacuation d'équipage est en particulier confondu avec l'axe longitudinal moyen 27 du véhicule orbital réutilisable. De plus, le véhicule d'évacuation d'équipage 34 est orienté de sorte que son nez 38 soit situé du côté de l'extrémité avant 24 du véhicule orbital réutilisable et que sa paroi arrière 40 soit située du côté opposé, c'est-à-dire du côté de l'extrémité arrière 26 du fuselage 22. En outre, les moyens propulsifs 44 du véhicule d'évacuation d'équipage 34 sont avantageusement configurés pour générer une poussée orientée dans la direction de déplacement nominale D2 du véhicule d'évacuation d'équipage 34, et donc en direction de l'extrémité avant 24 du véhicule orbital réutilisable.

Dans l'exemple préférentiel illustré, le nez 38 du véhicule d'évacuation d'équipage 34 constitue le nez 28 du véhicule orbital réutilisable 14.

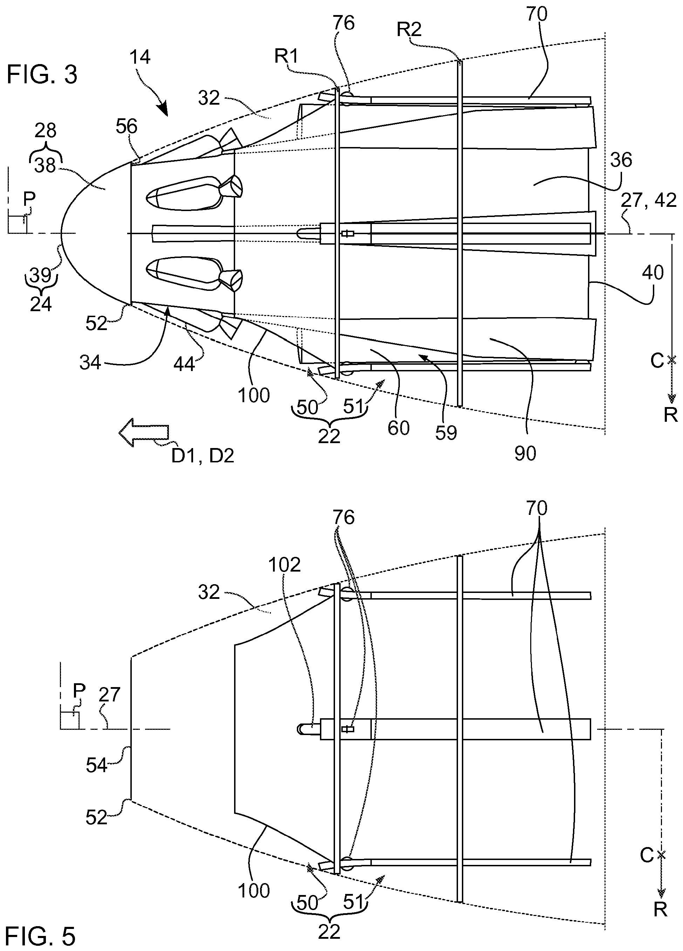

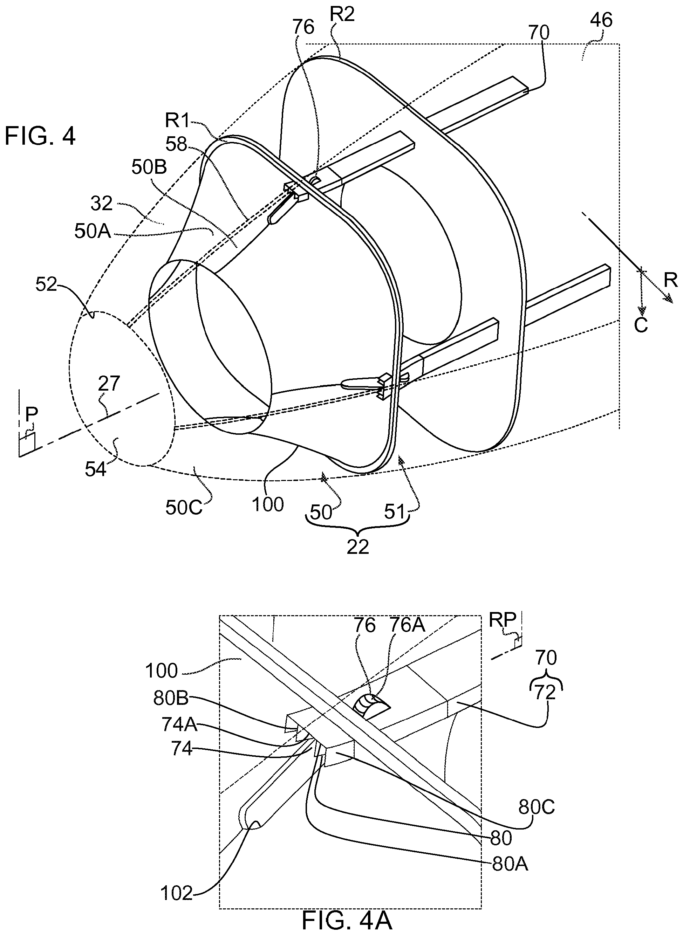

À cet effet, le fuselage 22 du véhicule orbital réutilisable 14 comprend un capotage 50 (« fairing » selon la terminologie anglo-saxonne) qui entoure le logement 32 du véhicule orbital réutilisable et s'étend de manière évasée en direction de l'extrémité arrière 26 de ce fuselage à partir d'une extrémité avant tronquée 52 (figures 4 et 5) du fuselage 22 définissant une ouverture 54 qui débouche dans le logement 32. De plus, le nez 38 du véhicule d'évacuation d'équipage 34 s'étend au travers de l'ouverture 54 en continuité aérodynamique avec le capotage 50. Ainsi, le véhicule d'évacuation d'équipage 34 occupe un espace ou logement s'étendant jusqu'à l'extrémité avant 24 du véhicule orbital réutilisable 14, cet espace correspondant à proprement parler au logement 32 et à l'espace occupé par le nez 38.

Une telle continuité entre le nez 38 du véhicule d'évacuation d'équipage et le capotage 50 du fuselage 22 du véhicule orbital réutilisable est par exemple obtenue au moyen d'un décrochement 56 formé à la base du nez 38 dans le fuselage 36 du véhicule d'évacuation d'équipage, et en regard duquel est disposée l'extrémité avant tronquée 52 du capotage 50 (figures 3, 6 et 7).

Du fait que la forme du véhicule d'évacuation d'équipage 34 est globalement évasée vers l'arrière de ce dernier, l'extraction de celui-ci hors du logement 32 implique qu'une partie arrière du véhicule d'évacuation d'équipage, plus large que l'ouverture 54, entre en collision avec le capotage 50 et casse ce dernier. Afin de faciliter au mieux ce processus et optimiser ainsi la vitesse d'extraction du véhicule d'évacuation d'équipage, le capotage 50 est conçu de manière à favoriser sa fragmentation sous l'effet de la collision avec le véhicule d'évacuation d'équipage 34. À cet effet, le capotage 50 est par exemple constitué d'une rangée annulaire de panneaux joints deux-à-deux par des liaisons frangibles 58 constituant des zones de rupture privilégiée. Trois de ces panneaux 50A-50C sont visibles sur les figures 2 et 4. Le capotage 50 s'étend par exemple vers l'arrière jusqu'à un cadre de fuselage avant R1 qui s'étend transversalement à l'axe 42. Au-delà du capotage 50 en direction de l'arrière, le fuselage 22 est par exemple formé d'un capot ou d'un assemblage de capots 51 pouvant être d'un type conventionnel. Les figures 2-4 permettent en outre d'apercevoir un cadre de fuselage arrière R2 qui s'étend également transversalement à l'axe 42. Les cadres de fuselage R1 et R2 sont destinés à la rigidification du fuselage, d'une manière connue en soi. Ces cadres R1 et R2 sont avantageusement disposés axialement de part et d'autre de l'emplacement d'un centre de gravité du véhicule d'évacuation d'équipage 34 lorsque ce dernier est installé dans le logement 32. Les cadres R1 et R2 contribuent ainsi à limiter les effets de balourd.

De manière générale, le fait que l'extraction du véhicule d'évacuation d'équipage 34 hors du véhicule orbital réutilisable 14 s'effectue vers l'avant, dans la direction de déplacement nominale D1 du véhicule orbital réutilisable ou, le cas échéant, de l'ensemble du système de transport spatial 10, rend possible cette extraction non seulement en phase d'ascension mais également sur le pas de tir avant décollage et pendant les phases d'approche, d'atterrissage, et même postérieurement à l'atterrissage, dans la mesure où les chances que le véhicule orbital réutilisable 14 présente une attitude compatible avec une telle extraction sont ainsi maximisées (on entend ici par attitude l'orientation du véhicule en fonction du référentiel terrestre). Une extraction vers l'avant sur pas de tir ou en phase d'ascension est particulièrement avantageuse dans la mesure où cela revient généralement pour l'équipage à partir dans la direction opposée au danger qui se trouve au niveau des étages propulsifs 16 du lanceur, donc en dessous du véhicule orbital réutilisable 14. Cela est d'autant plus remarquable que l'évacuation sur pas de tir ou en phase d'ascension est le cas d'évacuation nécessitant la plus grande rapidité de réaction compte-tenu de la nature généralement explosive du danger à ce stade.

Pour rendre la manœuvre d'évacuation supportable par l'équipage en termes de facteur de charge apparent, tout en permettant à ce dernier de supporter également la poussée inhérente à un décollage, le véhicule d'évacuation d'équipage comporte par exemple des sièges à orientation modifiable pour permettre aux membres de l'équipage d'être orienté de manière à ressentir la poussée dans leurs dos en toute phase critique, nominale ou non, présentant des facteurs de charge élevés, en particulier pendant une éventuelle évacuation au moyen du véhicule d'évacuation d'équipage 34.

De plus, le fait, pour le nez 38 du véhicule d'évacuation d'équipage 34, de faire également office de nez 28 pour le véhicule orbital réutilisable, présente l'avantage supplémentaire d'éviter d'avoir à briser le nez du véhicule orbital réutilisable 14 lors de l'extraction du véhicule d'évacuation d'équipage 34 hors du véhicule orbital réutilisable. Il faut en effet comprendre que lors de l'extraction du véhicule d'évacuation d'équipage 34 hors du véhicule orbital réutilisable 14, le véhicule d'évacuation d'équipage emporte avec lui le nez 38 qui faisait jusque-là office de nez 28 du véhicule orbital réutilisable. Cela est particulièrement avantageux dans la mesure où le nez 28 du véhicule orbital réutilisable 14 constitue la partie extrême avant de ce véhicule et est donc particulièrement soumis aux échauffements thermiques mais également aux contraintes mécaniques en phase de rentrée atmosphérique. Le nez 28 du véhicule orbital réutilisable 14 doit donc être un élément particulièrement résistant thermiquement et mécaniquement et l'est par exemple davantage que le reste du fuselage 36. Ne pas avoir à briser un tel élément lors d'une extraction du véhicule d'évacuation d'équipage 34, opération dont il est souhaitable qu'elle se fasse le plus rapidement possible, est donc un avantage considérable.

En variante, le véhicule orbital réutilisable 14 peut néanmoins comporter un nez 28 distinct du nez 38 du véhicule d'évacuation d'équipage 34 sans sortir du cadre de la présente divulgation. Il faut comprendre dans ce cas que le fuselage 22 est fermé au niveau de son extrémité avant de manière à définir le nez 28 du véhicule orbital réutilisable 14 devant le nez 38 du véhicule d'évacuation d'équipage 34. Dans ce cas, comme dans le cas précédent, le logement 32 s'étend jusqu'à l'extrémité avant du fuselage 22, qui est ici définie par le nez 28 formé par le fuselage 22. Il est à noter qu'à l'instar de l'espace occupé par le véhicule d'évacuation d'équipage 34 dans le cas précédent, le logement 32 peut ici être considéré comme s'étendant jusqu'à l'extrémité avant 24 du véhicule orbital réutilisable 14, abstraction faite de l'épaisseur du nez 28.

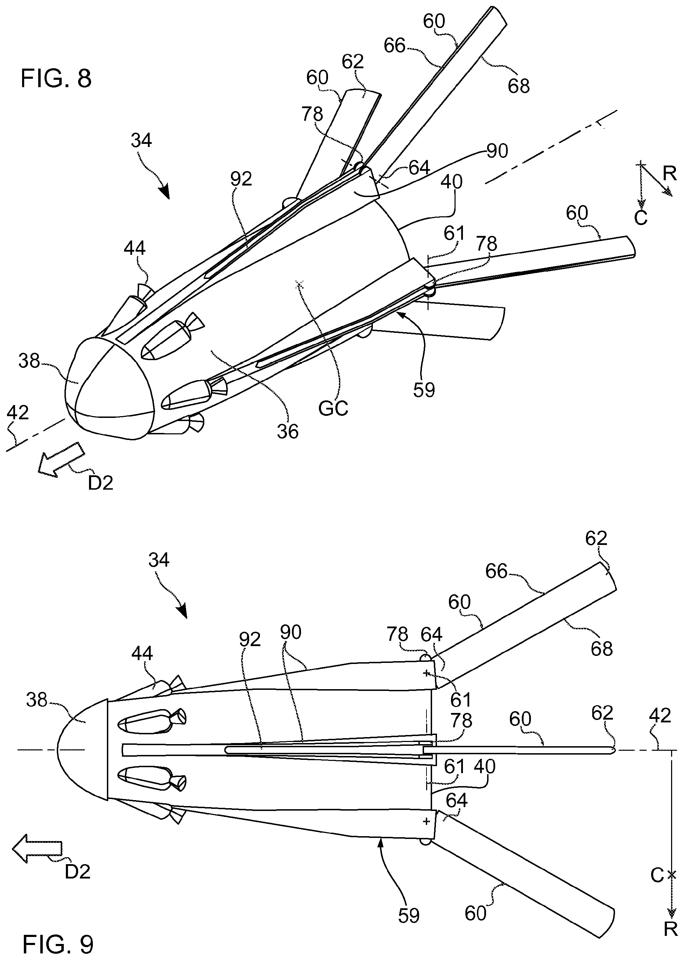

Selon un deuxième aspect de la présente divulgation, le véhicule d'évacuation d'équipage 34 comporte des dispositifs de stabilisation 59, et plus particulièrement des empennages stabilisateurs 60, qui sont chacun déplaçables entre une position rétractée le long du fuselage 36 (figures 6 et 7) pour permettre au véhicule d'évacuation d'équipage 34 de loger dans le logement 32 prévu à cet effet au sein du véhicule orbital réutilisable 14, et une position déployée vers l'arrière du véhicule d'évacuation d'équipage (figures 8 et 9), dans laquelle les empennages stabilisateurs 60 sont agencés en arrière de la position d'un centre de gravité GC du véhicule d'évacuation d'équipage (figure 8) et permettent la génération d'un effet « volant de badminton », également dénommé « effet jupe » ou « effet *shuttlecock ».*

L'effet « volant de badminton » se traduit de manière générale par le fait que le véhicule d'évacuation d'équipage 34, en vol balistique, s'oriente spontanément avec son nez 38 vers l'avant, et se déplace ainsi spontanément dans sa direction de déplacement nominale D2.

La génération d'un tel effet aérodynamique permet notamment d'éviter autant que possible que le véhicule d'évacuation d'équipage, qui n'est pas prévu pour générer une portance en vol, ne subisse des mouvements parasites non contrôlés tels que des mouvements de rotation autour de son axe 42, qui pourraient être préjudiciables à la survie de l'équipage.

Les empennages stabilisateurs 60 sont de préférence régulièrement répartis autour de l'axe 42 et sont par exemple au nombre de quatre. Des configurations avec seulement trois - ou plus de quatre - de ces empennages stabilisateurs 60, sont également possibles.

En référence aux figures 6-9, les empennages stabilisateurs 60 présentent des premières extrémités 62 respectives libres, et des secondes extrémités 64 respectives par lesquelles les empennages stabilisateurs 60 sont montés pivotants sur le fuselage 36 selon des axes de pivotement respectifs 61, de manière à être déplaçables entre leurs positions rétractée et déployée. Dans la position rétractée, les secondes extrémités 64 sont situées en arrière par rapport aux premières extrémités 62. De plus, des premiers bords 66 respectifs des empennages stabilisateurs 60 s'étendent le long de la surface externe du fuselage 36 et des seconds bords 68 respectifs des empennages, opposés aux premiers bords 66, sont plus éloignés de la surface externe du fuselage 36 que ne le sont les premiers bords 66. Dans la position déployée, les premières extrémités 62 respectives des empennages sont plus éloignées de la surface externe du fuselage 36 qu'elles ne le sont dans la position rétractée et sont situées en arrière par rapport aux secondes extrémités 64. À cet effet, les axes de pivotement 61 sont avantageusement ortho-radiaux par rapport à l'axe 42 du véhicule d'évacuation d'équipage 34.

La configuration d'empennages stabilisateurs 60 proposée est particulièrement remarquable du fait qu'elle permet d'obtenir l'effet « volant de badminton » dans une gamme de vitesses de vol très large, allant du domaine subsonique au domaine hypersonique, et couvrant ainsi la gamme des vitesses rencontrées au cours d'une mission spatiale avec rentrée atmosphérique.

Le déploiement des empennages stabilisateurs 60 est prévu pour avoir lieu dès l'extraction du véhicule d'évacuation d'équipage 34 hors de son logement 32. À cet effet, chacun des empennages stabilisateurs 60 est par exemple sollicité par un moyen élastique tel qu'un ressort de torsion 69 (illustré très schématiquement sur la figure 6) agissant autour de l'axe de pivotement 61 de l'empennage de manière à solliciter en permanence l'empennage 60 vers sa position déployée. Des moyens de rétention, dont un exemple sera décrit dans ce qui suit, permettent de maintenir les empennages stabilisateurs 60 dans leur position rétractée tant que le véhicule d'évacuation d'équipage 34 se trouve au sein du logement 32.

Dans l'exemple préférentiel illustré, les dispositifs de stabilisation 59, en particulier les seconds bords 68 respectifs des empennages stabilisateurs 60, font saillie par rapport au fuselage 36 dans la position rétractée.

Cette particularité est avantageusement mise à profit pour guider le véhicule d'évacuation d'équipage 34 au cours d'une extraction de ce dernier hors du véhicule orbital réutilisable 14, au moyen de structures de guidage 70 solidaires du fuselage 36 et faisant saillie dans le logement 32 (figures 4, 4A et 5) de manière à constituer des butées latérales vis-à-vis des dispositifs de stabilisation 59 du véhicule d'évacuation d'équipage (figures 2, 2A et 3). Il faut comprendre, par « butée latérale », une structure formant obstacle à un déplacement d'un dispositif de stabilisation 59 dans une direction orthogonale au plan moyen du dispositif de stabilisation, c'est-à-dire dans la direction ortho-radiale C, tel qu'un déplacement résultant d'une rotation du véhicule d'évacuation d'équipage 34 autour de son axe 42, comme cela apparaîtra plus clairement dans ce qui suit.

Dans l'exemple préférentiel illustré, les structures de guidage 70 comprennent respectivement des rails 72 respectivement centrés selon des plans RP passant par l'axe 42 et comportant chacun une rainure, dénommée rainure principale 74 dans ce qui suit, qui est par exemple centrée selon le plan RP correspondant passant par l'axe 42.

Les structures de guidage 70 sont de préférence configurées pour exercer en outre un appui radial vers l'intérieur sur les seconds bords 68 des empennages stabilisateurs 60 du véhicule d'évacuation d'équipage 34 de manière à contribuer en tout ou partie au centrage du véhicule d'évacuation d'équipage 34 au sein du logement 32 et au maintien des empennages stabilisateurs 60 dans leur position rétractée.

Afin de fluidifier le déplacement du véhicule d'évacuation d'équipage 34 lors de son extraction, le contact entre les structures de guidage 70 et les dispositifs de stabilisation 59 est avantageusement exercé au moyen de roulettes.

Dans l'exemple préférentiel illustré, les structures de guidage 70 comprennent ainsi des premières roulettes 76 respectives portées par les rails 72, de préférence à proximité d'extrémités avant des rails 72. Ces premières roulettes 76 font, chacune, saillie par rapport à un fond 74A de la rainure principale 74 correspondante (ledit fond étant visible sur les figures 2A et 4A), et comprennent par exemple chacune une gorge 76A (voir les figures 2A et 4A) dans laquelle est engagé le second bord 68 d'un empennage stabilisateur 60 correspondant, de sorte que des flancs de la gorge 76A constituent des butées latérales vis-à-vis de l'empennage stabilisateur 60 conformes à la définition donnée ci-dessus, tandis qu'un fond de la rainure centrale 76A exerce l'appui radial précité sur le second bord 68 de l'empennage comme expliqué ci-dessus, pendant le processus d'extraction du véhicule d'évacuation d'équipage. En variante, la première roulette 76 décrite ci-dessus peut être remplacée par deux roulettes entre lesquelles le second bord 68 d'un empennage stabilisateur 60 correspondant est pris en sandwich. Une telle disposition met avantageusement en œuvre un effet de coin entre les premières roulettes précitées et les flancs de l'empennage 60, tirant parti de la sollicitation de l'empennage 60 radialement vers l'extérieur par le moyen élastique précité et du caractère légèrement évasé de l'empennage 60 radialement vers l'intérieur à partir du second bord 68.

De plus, les dispositifs de stabilisation 59 comprennent des secondes roulettes 78 (figures 6 et 7), situées en arrière par rapport aux premières roulettes 76 lorsque le véhicule d'évacuation d'équipage 34 est installé dans le logement 32. Ces secondes roulettes 78 sont agencées pour s'engager dans des rainures latérales 80 formées par les rails 72 et adjacentes aux rainures principales 74 (figures 2A et 4A). Chaque rainure latérale 80 est définie par un fond 80A et par deux nervures latérales 80B, 80C.

Par exemple, à chaque empennage stabilisateur 60 sont associées deux secondes roulettes 78 disposées de chaque côté de l'empennage, par exemple à proximité d'extrémités arrière de ce dernier, et engagées respectivement dans les deux rainures latérales 80 du rail 72 correspondant.

Les nervures latérales 80B, 80C des rainures latérales 80 constituent ainsi des butées latérales vis-à-vis de l'empennage stabilisateur 60 conformes à la définition donnée ci-dessus, tandis que les fonds 80A respectifs des rainures latérales 80 forment des pistes de roulement pour les secondes roulettes 78 et contribuent ainsi au centrage du véhicule d'évacuation d'équipage 34 au sein du logement 32.

Lors de l'extraction du véhicule d'évacuation d'équipage 34, les secondes roulettes 78 suivent l'avancée du véhicule d'évacuation d'équipage en roulant contre les fonds 80A respectifs des rainures latérales 80, et finissent par quitter les rainures latérales 80 au travers d'extrémités avant de ces dernières. Un tel agencement permet ainsi d'éviter toute interférence entre les premières roulettes 76, fixes par rapport au véhicule orbital réutilisable 14 et disposées dans la rainure centrale 74 de chaque rail 72, et les secondes roulettes 78 portées par le véhicule d'évacuation d'équipage 34 et décalées latéralement par rapport aux premières roulettes 76 en étant par exemple disposées dans les rainures latérales 80 de chaque rail 72.

Dans l'exemple préférentiel illustré, les dispositifs de stabilisation 59 comportent respectivement des structures fixes 90, s'étendant par exemple longitudinalement et faisant saillie radialement par rapport au fuselage 36 de ce véhicule. Ces structures fixes 90 définissent des rainures 92 (figures 8 et 9) dans lesquelles sont logés les premiers bords 66 respectifs des empennages stabilisateurs 60 en position rétractée. Ces structures fixes 90 sont en outre avantageusement profilées de manière à contribuer à la stabilisation aérodynamique du véhicule d'évacuation d'équipage 34 en combinaison avec les empennages stabilisateurs 60 en position déployée. De plus, les structures fixes 90 permettent de rigidifier le fuselage 36, ce qui est particulièrement avantageux compte-tenu des contraintes mécaniques élevées que le fuselage doit supporter lors d'une manœuvre d'extraction du véhicule d'évacuation d'équipage. Enfin, les structures fixes 90 présentent avantageusement une forme effilée vers l'avant du véhicule d'évacuation d'équipage 34, par exemple dans les directions radiale et circonférentielle, de manière à contribuer à la satisfaction de la loi des aires par le véhicule d'évacuation d'équipage.

Dans l'exemple illustré, les secondes roulettes 78 sont portées par les structures fixes 90.

Selon un autre aspect de la présente divulgation, le véhicule orbital réutilisable 14 comporte une collerette déflectrice 100 (« baffle skirt » en anglais) de forme générale annulaire évasée en direction de l'arrière, par exemple sensiblement tronconique, s'étendant au sein du logement 32 de manière à entourer le fuselage 36 du véhicule d'évacuation d'équipage 34 lorsque ce dernier y est logé, en étant disposée en arrière par rapport aux moyens propulsifs 44 rapportés sur le fuselage 36 du véhicule d'évacuation d'équipage, et axialement en regard desdits moyens propulsifs 44. À cet effet, les moyens propulsifs 44, qui sont par exemple constitués de plusieurs moteurs-fusées, sont agencés dans une partie avant du fuselage 36, de préférence en arrière et à proximité de la base du nez 38.

La collerette déflectrice 100 permet ainsi de dévier les jets de gaz produits par les moyens propulsifs 44 au début d'une manœuvre d'extraction du véhicule d'évacuation d'équipage et de protéger ainsi le véhicule orbital réutilisable 14 en garantissant son intégrité mécanique et structurale. Lors d'une telle manœuvre, la forme du véhicule d'évacuation d'équipage 34 globalement évasée vers l'arrière implique qu'une partie arrière du véhicule entre en collision au moins avec une partie radialement interne de la collerette déflectrice 100 et provoque une fragmentation de celle-ci. La collerette déflectrice 100 est donc conçue pour faciliter une telle fragmentation, par exemple au moyen de zones de rupture privilégiée définies aux jonctions entre des panneaux constituant la collerette, de manière analogue à ce qui est décrit ci-dessus en ce qui concerne le capotage 50.

Dans l'exemple illustré, la collerette déflectrice 100 présente une extrémité arrière raccordée au cadre de fuselage avant R1. Le cadre de fuselage avant R1 permet ainsi en particulier d'encaisser les efforts induits par la déflexion des jets de gaz produits par les moyens propulsifs 44.

Dans l'exemple illustré, les empennages stabilisateurs 60 s'étendent vers l'avant au-delà de la collerette déflectrice 100. Cette dernière est ainsi pourvue d'ouvertures 102 de forme allongée dans la direction radiale R, au travers desquelles s'étendent des parties d'extrémité avant des empennages 60 (figures 2A et 4A).

En variante, les moyens propulsifs 44 peuvent être agencés dans une partie arrière du véhicule d'évacuation d'équipage 34 sans sortir du cadre général de la présente divulgation.

Au vu de ce qui précède, il faut donc comprendre qu'un procédé d'évacuation de l'équipage d'un véhicule orbital réutilisable 14 du type décrit ci-dessus comprend, de manière générale, des étapes consistant à :
- A) installer l'équipage du véhicule orbital réutilisable 14 au sein du véhicule d'évacuation d'équipage 34 ; cette étape A peut correspondre à l'installation initiale de l'équipage au sein du véhicule orbital 14 réutilisable avant décollage, notamment dans le cas où l'évacuation a lieu lors du décollage ou en phase d'ascension ; dans le cas où l'évacuation a lieu dans une phase ultérieure d'une mission spatiale, l'étape A peut notamment consister, pour l'équipage, à regagner le véhicule d'évacuation d'équipage 34 après avoir séjourné dans une autre partie du véhicule orbital réutilisable 14 telle que l'espace de travail 46 ;
- B) évacuer l'équipage en déplaçant le véhicule d'évacuation d'équipage 34 dans ladite direction D1 de manière à l'extraire hors du logement ; l'étape B peut être mise en œuvre au cours de l'une quelconque des phases de décollage, d'ascension, de fin de rentrée atmosphérique, d'approche finale, d'atterrissage et post-atterrissage d'une mission spatiale.

Le cas échéant, comme expliqué ci-dessus, le véhicule d'évacuation d'équipage 34 emporte avec lui le nez 28 du véhicule orbital réutilisable au cours de l'étape B.

Le cas échéant, comme expliqué ci-dessus, le véhicule d'évacuation d'équipage 34 provoque la rupture desdites liaisons frangibles 58 au cours de l'étape B.

Le cas échéant, comme expliqué ci-dessus, le véhicule d'évacuation d'équipage 34 provoque la rupture de ladite collerette déflectrice 100 au cours de l'étape B.

Le cas échéant, comme expliqué ci-dessus, les empennages stabilisateurs 60 se déplacent au cours de l'étape B, depuis ladite position rétractée jusque dans ladite position déployée.

Le cas échéant, comme expliqué ci-dessus, le véhicule d'évacuation d'équipage 34 est empêché de tourner autour de son axe 42 par lesdites structures de guidage 70 au cours de l'étape B.

## Revendications

1. Véhicule orbital réutilisable (14) pour système de transport spatial (10), comprenant un fuselage (22) de forme évasée dans une direction allant d'une extrémité avant (24) du véhicule orbital réutilisable jusqu'à une extrémité arrière (26) dudit fuselage (22) et au sein duquel est défini un logement (32) s'étendant jusqu'à l'extrémité avant (24) du véhicule orbital réutilisable (14), et un véhicule d'évacuation d'équipage (34) logé dans ledit logement (32) en étant orienté pour s'extraire du logement (32) dans une direction (D1) orientée depuis ladite extrémité arrière (26) du fuselage (22) vers ladite extrémité avant (24) du véhicule orbital réutilisable (14).

2. Véhicule orbital réutilisable selon la revendication 1, dans lequel :
- ledit fuselage (22) comprend un capotage (50) qui entoure le logement (32) et qui s'étend de manière évasée en direction de l'extrémité arrière (26) de ce fuselage (22) à partir d'une extrémité avant (52) du fuselage (22) qui est tronquée de manière à définir une ouverture (54) débouchant dans le logement (32) ; et
- le véhicule d'évacuation d'équipage (34) comporte un fuselage (36) qui présente un nez (38) s'étendant au travers de l'ouverture (54) de manière à constituer un nez (28) du véhicule orbital réutilisable (14).

3. Véhicule orbital réutilisable selon la revendication 2, dans lequel ledit nez (38) s'étend en continuité aérodynamique avec le capotage (50).

4. Véhicule orbital réutilisable selon la revendication 2 ou 3, dans lequel le fuselage (36) du véhicule d'évacuation d'équipage (34) présente un décrochement (56) formé à la base dudit nez (38), et dans lequel l'extrémité avant (52) du capotage (50) est agencée axialement en regard dudit décrochement (56).

5. Véhicule orbital réutilisable selon l'une quelconque des revendications 2 à 4, dans lequel le capotage (50) est formé d'une rangée annulaire de panneaux (50A-50C) joints deux-à-deux par des liaisons frangibles (58) constituant des zones de rupture privilégiée.

6. Véhicule orbital réutilisable selon l'une quelconque des revendications 1 à 5, comprenant une collerette déflectrice (100) de forme générale tronconique, s'étendant au sein du logement (32) de manière à entourer le véhicule d'évacuation d'équipage (34) et à être disposée en arrière et axialement en regard par rapport à des moyens propulsifs (44) du véhicule d'évacuation d'équipage configurés pour générer une poussée dans ladite direction (D1).

7. Procédé d'évacuation d'un équipage d'un véhicule orbital réutilisable (14) selon l'une quelconque des revendications 1 à 6, comprenant des étapes consistant à :
- A) installer l'équipage du véhicule orbital réutilisable (14) au sein du véhicule d'évacuation d'équipage (34) ; puis
- B) évacuer l'équipage en déplaçant le véhicule d'évacuation d'équipage (34) dans ladite direction (D1) de manière à l'extraire hors du logement (32).

8. Procédé selon la revendication 7, dans lequel le véhicule orbital réutilisable (14) est conforme à la revendication 2, moyennant quoi le véhicule d'évacuation d'équipage (34) emporte avec lui le nez (28) du véhicule orbital réutilisable au cours de l'étape B.

9. Procédé selon la revendication 7 ou 8, dans lequel le véhicule orbital réutilisable (14) est conforme à la revendication 5 et dans lequel le véhicule d'évacuation d'équipage (34) provoque la rupture desdites liaisons frangibles (58) au cours de l'étape B.

10. Procédé selon l'une quelconque des revendications 7 à 9, dans lequel le véhicule orbital réutilisable (14) est conforme à la revendication 6 et dans lequel le véhicule d'évacuation d'équipage (34) provoque la rupture de ladite collerette déflectrice (100) au cours de l'étape B.

11. Procédé selon l'une quelconque des revendications 7 à 10, dans lequel l'étape B est mise en œuvre au cours de l'une quelconque des phases de décollage, d'ascension, de fin de rentrée atmosphérique, d'approche finale, d'atterrissage et post-atterrissage.

## Patentansprüche

1. Wiederverwendbares Orbitalfahrzeug (14) für ein Raumtransportsystem (10), das einen von einem vorderen Ende (24) zu einem hinteren Ende (26) hin aufgeweiteten Rumpf (22) umfasst, in dem ein Aufnahmeraum (32) ausgebildet ist, der sich bis zum vorderen Ende (24) des wiederverwendbaren Orbitalfahrzeugs (14) erstreckt, sowie ein in dem Aufnahmeraum (32) aufgenommenes Besatzungsevakuierungsfahrzeug (34), das derart positioniert ist, dass es sich in Richtung (D1) vom hinteren Ende (26) des Rumpfes (22) zum vorderen Ende (24) des wiederverwendbaren Orbitalfahrzeugs (14) aus dem Aufnahmeraum (32) herausbewegen kann.

2. Wiederverwendbares Orbitalfahrzeug nach Anspruch 1, wobei:
- der genannte Rumpf (22) eine Verkleidung (50) umfasst, die den Aufnahmeraum (32) umgibt und sich von einem vorderen Ende (52) des Rumpfes (22), das abgeschrägt ist, um eine in den Aufnahmeraum (32) mündende Öffnung (54) zu definieren, in aufgeweiteter Weise in Richtung eines hinteren Endes (26) dieses Rumpfes (22) erstreckt; und
- das Besatzungsevakuierungsfahrzeug (34) einen Rumpf (36) hat, dessen Nase (38) durch die Öffnung (54) verläuft, sodass sie eine Nase (28) des wiederverwendbaren Orbitalfahrzeugs (14) bildet.

3. Wiederverwendbares Orbitalfahrzeug nach Anspruch 2, bei dem die Nase (38) aerodynamisch in die Verkleidung (50) übergeht.

4. Wiederverwendbares Orbitalfahrzeug nach Anspruch 2 oder 3, bei dem der Rumpf (36) des Besatzungsevakuierungsfahrzeugs (34) eine an der Basis dieser Nase (38) ausgebildete Wölbung (56) aufweist, und bei dem das vordere Ende (52) der Verkleidung (50) in axialer Ausrichtung zu dieser Wölbung (56) angeordnet ist.

5. Wiederverwendbares Orbitalfahrzeug nach einem der Ansprüche 2 bis 4, bei dem die Verkleidung (50) eine Reihe ringsum angeordneter Paneele (50A-50C) umfasst, die paarweise durch Sollbruchstellen (58) verbunden sind, welche gezielt geschwächte Bruchzonen darstellen.

6. Wiederverwendbares Orbitalfahrzeug nach einem der Ansprüche 1 bis 5 mit einem Deflektorkragen (100) von allgemein kegelstumpfförmiger Form, der sich innerhalb des Aufnahmeraums (32) derart erstreckt, dass er das Besatzungsevakuierungsfahrzeug (34) umgibt und hinter den Antriebsmitteln (44) des Besatzungsevakuierungsfahrzeugs angeordnet ist sowie diesen axial gegenüberliegt, wobei die Antriebsmittel (44) dazu ausgebildet sind, einen Schub in der genannten Richtung (D1) zu erzeugen.

7. Verfahren zur Evakuierung einer Besatzung aus einem wiederverwendbaren Orbitalfahrzeug (14) gemäß einem der Ansprüche 1 bis 6, das folgende Schritte umfasst:
- A) Unterbringen der Besatzung des wiederverwendbaren Orbitalfahrzeugs (14) im Besatzungsevakuierungsfahrzeug (34); dann
- B) Evakuieren der Besatzung durch Bewegen des Besatzungsevakuierungsfahrzeugs (34) in die genannte Richtung (D1), um es aus dem Aufnahmeraum (32) zu entfernen.

8. Verfahren nach Anspruch 7, bei dem das wiederverwendbare Orbitalfahrzeug (14) dem Anspruch 2 entspricht, wodurch das Besatzungsevakuierungsfahrzeug (34) die Nase (28) des wiederverwendbaren Orbitalfahrzeugs im Verlauf des Schrittes B mit sich führt.

9. Verfahren nach Anspruch 7 oder 8, bei dem das wiederverwendbare Orbitalfahrzeug (14) gemäß Anspruch 5 ausgestaltet ist und bei dem das Besatzungsevakuierungsfahrzeug (34) den Bruch der genannten Sollbruchstellen (58) im Verlauf des Schrittes B hervorruft.

10. Verfahren nach einem der Ansprüche 7 bis 9, bei dem das wiederverwendbare Orbitalfahrzeug (14) gemäß Anspruch 6 ausgestaltet ist und bei dem das Besatzungsevakuierungsfahrzeug (34) den Bruch des genannten Deflektorkragens (100) im Verlauf des Schrittes B hervorruft.

11. Verfahren nach einem der Ansprüche 7 bis 10, wobei Schritt B während einer beliebigen der Phasen Start, Aufstieg, Abschluss des atmosphärischen Wiedereintritts, Endanflug, Landung und Phase nach der Landung durchgeführt wird.

## Claims

1. Reusable orbital vehicle (14) for a space transport system (10), comprising a fuselage (22) with a shape splayed in a direction going from a front end (24) of the reusable orbital vehicle as far as a rear end (26) of said fuselage (22) and within which a housing (32) is defined extending as far as the front end (24) of the reusable orbital vehicle (14), and a crew-evacuation vehicle (34) housed in said housing (32) while being oriented so as to be extracted from the housing (32) in a direction (D1) oriented from said rear end (26) of the fuselage (22) towards said front end (24) of the reusable orbital vehicle (14).

2. Reusable orbital vehicle according to claim 1, wherein:
- said fuselage (22) comprises a fairing (50) that surrounds the housing (32) and extends so as to be splayed in the direction of the rear end (26) of this fuselage (22) from a front end (52) of the fuselage (22), which is truncated so as to define an opening (54) emerging in the housing (32); and
- the crew-evacuation vehicle (34) comprises a fuselage (36) that has a nose (38) extending through the opening (54) so as to constitute a nose (28) of the reusable orbital vehicle (14).

3. Reusable orbital vehicle according to claim 2, wherein said nose (38) extends in aerodynamic continuity with the fairing (50).

4. Reusable orbital vehicle according to claim 2 or 3, wherein the fuselage (36) of the crew-evacuation vehicle (34) has a step (56) formed at the base of said nose (38), and wherein the front end (52) of the fairing (50) is arranged axially facing said step (56).

5. Reusable orbital vehicle according to any one of claims 2 to 4, wherein the fairing (50) is formed by an annular row of panels (50A-50C) joined in pairs by frangible connections (58) constituting preferred rupture zones.

6. Reusable orbital vehicle according to any one of claims 1 to 5, comprising a baffle skirt (100) with a roughly frustoconical shape, extending within the housing (32) so as to surround the crew-evacuation vehicle (34) and to be disposed at the rear and axially facing with respect to propulsion means (44) of the crew-evacuation vehicle configured to generate a thrust in said direction (D1).

7. Method for evacuating a crew of a reusable orbital vehicle (14) according to any one of claims 1 to 6, comprising steps consisting in:
- A) installing the crew of the reusable orbital vehicle (14) in the crew-evacuation vehicle (34); then
- B) evacuating the crew by moving the crew-evacuation vehicle (34) in said direction (D1) so as to extract it out of the housing (32).

8. Method according to claim 7, wherein the reusable orbital vehicle (14) is in accordance with claim 2, by means of which the crew-evacuation vehicle (34) takes with it the nose (28) of the reusable orbital vehicle during the step B.

9. Method according to claim 7 or 8, wherein the reusable orbital vehicle (14) is in accordance with claim 5, and wherein the crew-evacuation vehicle (34) causes the rupture of said frangible connections (58) during the step B.

10. Method according to any one of claims 7 to 9, wherein the reusable orbital vehicle (14) is in accordance with claim 6, and wherein the crew-evacuation vehicle (34) causes the rupture of said baffle skirt (100) during the step B.

11. Method according to any one of claims 7 to 10, wherein the step B is performed during any one of the takeoff, ascent, end of atmosphere re-entry, final approach, landing and post-landing phases.
